**Europäisches Patentamt**

**European Patent Office**

**Office européen des brevets**

(19)

(11) Numéro de publication: **0 215 877
B1**

(12)

# FASCICULE DE BREVET EUROPEEN

(45) Date de publication du fascicule du brevet:
**18.10.89**

(21) Numéro de dépôt: **86901900.0**

(22) Date de dépôt: **19.03.86**

(86) Numéro de dépôt international:
**PCT/FR 86/00093**

(87) Numéro de publication internationale:
**WO 86/05381 (25.09.86 Gazette 86/21)**

(51) Int. Cl.⁴: **A 61 C 5/10**

(54) **BAGUE POUR LA REALISATION DE COURONNES DENTAIRES.**

(30) Priorité: **20.03.85 FR 8504116**

(43) Date de publication de la demande:
**01.04.87 Bulletin 87/14**

(45) Mention de la délivrance du brevet:
**18.10.89 Bulletin 89/42**

(84) Etats contractants désignés:
**AT BE CH DE FR GB IT LI LU NL SE**

(56) Documents cités:
**FR-A- 2 454 795
FR-A- 2 500 294
FR-A- 2 529 780
GB-A- 2 018 666
US-A- 4 206 545**

(73) Titulaire: **SPIRY, Jean-Louis, 76, rue de Crimée,
F-75019 Paris (FR)**

(72) Inventeur: **SPIRY, Jean-Louis, 76, rue de Crimée,
F-75019 Paris (FR)**

(74) Mandataire: **Bouju, André, Cabinet Bouju 38 avenue de
la Grande Armée, F-75017 Paris (FR)**

## Description

L'invention concerne une bague pour la réalisation de couronnes dentaires. Plus particulièrement, l'invention se rapporte à une bague dentaire, utilisable pour la réalisation de couronnes aussi bien provisoires que définitves.

La couronne provisoire est une prothèse transitoire destinée à restaurer l'organe dentaire atteint, depuis la préparation de la dent jusqu'au scellement de la prothèse définitive.

Le problème des prothèses provisoires, en odontologie, se pose avec une certaine acuité pour deux raisons au moins. La première est de répondre classiquement à la demande du patient qui désire masquer l'aspect inesthétique des dents préparées, pendant la période d'élaboration des prothèses. La seconde est que cette prothèse provisoire doit assurer la protection pulpaire de la dent taillée, ou permettre son traitement endodontique en cas de délabrement important; restaurer ou maintenir un parodonte sain; autoriser un éventuel déplacement orthodontique; bloquer la dent pilier dans ses rapports avec les dents antagonistes et adjacentes enregistrées lors de l'empreinte de travail; et guider le prothésiste lors de l'élaboration de la prothèse définitive.

Il est déjà connu de réaliser des couronnes dentaires provisoires au moyen d'une bague que l'on place sur et autour du moignon préalablement taillé de la dent à reconstituer, et que l'on remplit de résine. Les bagues connues présentent certains inconvénients. Certaines sont en métal, ce qui est inesthétique, et elles sont strictement cylindriques, ce qui les rend très inesthétiques. On connaît également des bagues préformées en polycarbonate. Celles-ci présentent les inconvénients suivants: leurs faces occlusales sont stéréotypées sans possibilité d'adaptation aux dents antagonistes. Ainsi, la forme des couronnes temporaires obtenues à partir de telles bagues ne correspond pas à celle des dents sur lesquelles elles sont mises en place, de sorte qu'avant de les mettre sur les dents, le dentiste doit modifier leur forme pour les ajuster. Dans la plupart des cas, la bague est tronconique et évasée vers le bas et ne prend pas en compte l'anatomie d'une dent alvéolée. De plus, l'extrémité ouverte de la bague doit être découpée en festons de manière à correspondre plus ou moins au contour de la lingne de la gencive.

La couronne définitive est une prothèse scellée ou collée pour être permanente. Le problème des couronnes dentaires esthétiques et définitives se pose avec une certaine acuité avec l'apparition des résines composites. En effet, avec ces matériaux, il est possible de réaliser des reconstitutions complètes de dents. Grâce à l'utilisation de colles amélo-dentinaires il est possible de coller ces matériaux à l'émail et à la dentine des dents.

Il est déjà connu de réaliser des reconstitutions complètes de dents au moyen d'une bague que l'on place à l'emplacement de la dent, et que l'on remplit d'une résine composite du genre précité. Cependent ces bagues présentent certains inconvénients.

Les bagues métalliques ont une forme de tronc de cône qui ne correspond pas en général exactement à la forme anatomique des autres dents se trouvant à l'intérieur de la bouche. Cette différence d'anatomie entre la couronne ainsi réalisée, totalement inesthétique, et une dent naturelle peut être la cause d'une mauvaise déflection alimentaire qui se traduira par des lésions au niveau de la gencive marginale. D'autre part, ces bagues métalliques ne permettent pas l'utilisation des composites photopolymérisables. De plus, il n'existe aucun procédé satisfaisant pour modifier le contour de ces bagues afin de les rendre plus esthétiques et de les adapter à la forme de la dent à reconstituer et des dents adjacentes à celles-ci.

Les bagues connues en celluloïd, du fait de leur extrême déformabilité, ne reproduisent que très imparfaitement l'anatomie réelle. Par ailleurs, il est difficile de les meuler, car le meulage coupe immédiatement leur paroi mince.

On connaît d'autre part, selon la demande de brevet français 2 454 795 une matrice à usage dentaire permettant de faciliter l'obturation des dents latérales, constituée par une lame profilée ayant une section transversale arquée, cette lame étant incurvée de façon à former un anneau fermé, bombé extérieurement, de dimensions telles qu'elle permette une reconstitution approximative de la forme anatomique de la dent détruite par des caries ou des influences mécaniques. Cette lame est pourvue d'au moins une languette de déchirage qui permet de diviser la matrice en deux ou plusieurs parties pour faciliter son extraction, après durcissement du produit d'obturation de la dent.

Toutefois, une telle matrice ne pourrait convenir pour réaliser une couronne provisoire destinée à rester plusieurs semaines dans la bouche pour plusieurs raisons: d'une part les languettes de déchirage constituent une saillie et ne pourraient rester présentes à l'intérieur de la bouche; d'autre part le bord supérieur de la lame constitue une aspérité qui ne peut non plus demeurer à l'intérieur de la bouche. De plus, l'étanchéïté entre ce bord et une éventuelle matière de remplissage ne pourrait subsister très longtemps. Enfin, le profil extérieur de la lame ne présente pas celle d'une dent, ce qui la rend également peu compatible pour la réalisation d'une couronne même provisoire.

L'un des buts de l'invention est de proposer de réaliser, à partir de la même bague une couronne dentaire provisoire ou définitive particulièrement esthétique, évitant les inconvénients précédents et permettant de rétablir l'occlusion ainsi que les points de contact avec les dents adjacentes, au moyen d'opérations particulièrement simples à mettre en oeuvre.

Un autre but de l'invention est de permettre la réalisation de cette couronne provisoire ou définitive en une seule séance de soins au cabinet dentaire, sans intervention d'un laboratoire de fabrication de prothèses.

L'invention a pour objet une bague pour la réalisation de couronnes dentaires, provisoires ou définitives, destinées à recevoir à l'emplacement de la dent à reconstituer, un produit de remplissage pour reconstituer la dent. Suivant l'invention, la bague est obtenue par moulage et présente au moins une fente s'étendant sur toute la hauteur de la bague dont les bords présentent deux brides solidarisées l'une à l'autre, et s'étendant sur une partie de la hauteur de la face latérale de la bague, cette bague présente un rebord cuspidien, la forme de ce rebord et celle de la face latérale de la bague correspondant à la forme extérieure de la dent à reconstituer, et les deux brides sont adaptées pour pouvoir être séparées de la bague après introduction et durcissement du produit de remplissage à l'intérieur de la bague.

Du fait de sa forme extérieure, la bague conforme à l'invention reproduit la forme extérieure de la dent à reconstituer, de sorte qu'elle peut rester en place, dans le cas d'une couronne provisoire. Le rebord cuspidien de cette bague, tout en reproduisant la forme du bord correspondant d'une dent permet d'améliorer la liaison mécanique et l'étanchéité entre la bague et le produit de remplissage, tout en constituant un renfort mécanique du bord de la couronne provisoire, ce qui lui permet de résister aux efforts mécaniques engendrés lors de la mastication.

Par ailleurs, les brides, compte tenu de leur structure et de leur position, peuvent être facilement séparées de la bague après durcissement du produit de remplissage coulé dans la bague de façon à ne constituer aucune gêne pour le patient, lorsque la bague est utilisée comme couronne provisoire.

Un intérêt important de la présente invention réside dans le fait que la bague selon l'invention, peut sans modification être utilisée pour réaliser une couronne définitive.

Selon une version particulière de l'invention, la bague est constituée de deux demi-coquilles assemblées l'une à l'autre par deux paires de brides espacées l'une de l'autre. Ces deux demi-coquilles peuvent être facilement moulées à la forme naturelle et anatomique d'une dent et leurs brides peuvent être aisément séparées de la bague par sciage et meulage au moyen des instruments classiques dont dispose le dentiste.

Selon d'autres caractéristiques de l'invention,
— les brides sont solidarisées par collage, soudure, soudure à ultrasons ou autre,
— la bague est translucide,
— la forme extérieure de la bague correspond à la forme extérieure de la dent à reconstituer,
— la bague est sensiblement d'épaisseur constante, de sorte que la forme intérieure de la bague correspond à la forme extérieure de la dent à reconstituer,
— dans le cas d'une couronne définitive, le produit de remplissage est une résine composite,
— cette résine composite est photopolymérisable pour éviter l'inclusion de bulles d'air en son intérieur et pour permettre un temps de travail à la convenance du dentiste.

L'invention a aussi pour objet l'application d'une telle bague à la constitution d'une couronne provisoire, dans laquelle la bague est conservée comme partie intégrante de la couronne provisoire susceptible de pouvoir rester en place à l'intérieur de la bouche pendant plusieurs semaines ou davantage.

L'invention a en outre pour objet l'application d'une telle bague à la constitution d'une couronne définitive, dans laquelle la bague est utilisée comme moule de coffrage pour une résine composite puis est enlevée et la couronne est ensuite renforcée en résine pour constituer les points de contact avec les dents adjacentes et rattraper l'épaisseur de la bague qui a été enlevée.

D'autres caractéristiques ressortent de la description qui suit faite avec référence aux dessins annexés sur lesquels:

la figure 1 est une vue en perspective d'un exemple de réalisation d'une bague selon l'invention, pour la réalisation de couronnes dentaires provisoires ou définitives,

la figure 2 est une vue en coupe selon un plan horizontal de la bague de la figure 1,

la figure 3 est une vue, dans un plan vertical perpendiculaire à l'axe de l'alignement des dents, de la bague de la figure 1,

la figure 4 est une vue extérieure, dans un plan vertical contenant l'axe de l'alignement des dents, de la bague de la figure 1,

la figure 5 est une vue en coupe selon le plan vertical contenant l'axe de l'alignement des dents, de la bague de la figure 1,

la figure 6 est une vue en coupe agrandie du rebord cuspidien de la bague de la figure 5, servant de guide à une spatule,

la figure 7 est une vue en coupe dans le plan vertical de l'alignement des dents, montrant la position d'une couronne réalisée selon l'invention, par rapport aux dents adjacentes et antagonistes,

la figure 8 est une vue montrant la couronne obtenue après enlèvement de la bague et montrant en pointillés la partie excédentaire de produit de remplissage à enlever dans le cas d'une couronne définitive ou provisoire,

la figure 9 est une vue en coupe partielle à échelle agrandie de la couronne montrant l'opération de meulage pour enlever la partie excédentaire,

la figure 10 est une vue analogue à la figure 9, montrant la couronne obtenue après la fin de l'opération de meulage,

la figure 11 est une vue analogue à la figure 1 d'une variante de réalisation d'une bague selon l'invention, pour la réalisation de couronnes dentaires provisoires ou définitives,

la figure 12 est une vue en coupe selon un plan horizontal de la bague de la figure 11,

la figure 13 est une vue, dans un plan vertical perpendiculaire à l'axe de l'alignement des dents, de la bague de la figure 11,

les figures 14 et 15 sont des vues schématiques en coupe concernant des variantes de réalisation de la bague.

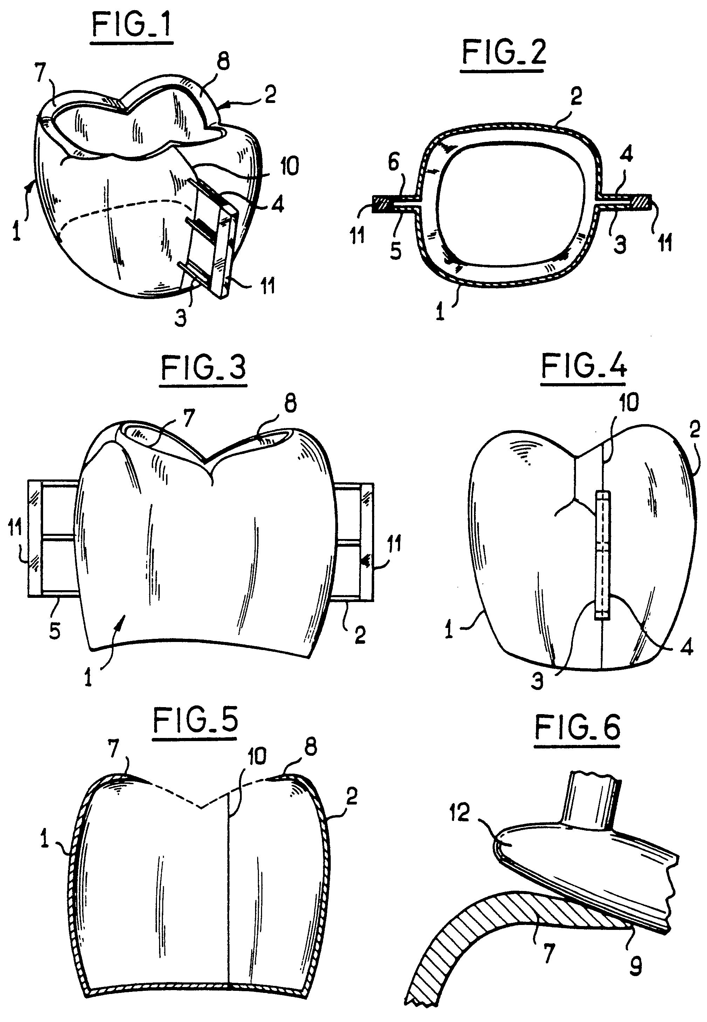

Dans la réalisation de la figure 1, on voit que la bague selon l'invention se compose de deux demi-coquilles 1 et 2 non identiques et obtenues par moulage, présentant un rebord cuspidien 7, 8 à la partie supérieure de leur face latérale qui laisse la face occlusale de la bague ouverte pour la mise en place du produit de remplissage à l'intérieur de la bague. On peut mieux voir sur la figure 2, que les deux demi-coquilles 1, 2, portent chacune deux brides 3, 5 et 4, 6 respectivement, qui s'étendent sur une partie de la hauteur de la bague. Ces brides 3, 5; 4, 6 sont constituées par des bandes de faible section (voir figure 3) pour pouvoir être sectionnées facilement. Ces brides 3, 5; 4, 6 sont placées face à face, et sont collées ou soudées, par exemple par ultrasons, sur leur bord extérieur 11. La soudure est réalisée à distance des parois latérales de la bague (voir figures 1, 2, 3) afin que sa section lors du démoulage n'altère pas l'anatomie coronaire. La ligne de séparation des demi-coquilles 1, 2 est symbolisée en 10 sur les figures 1, 4 et 5. Le plan des brides 3, 5; 4, 6 est de préférence disposé perpendiculairement à l'axe de l'alignement des dents sur une partie de maxillaire. Ce plan des brides peut être déplacé par rapport au plan de symétrie de la dent, comme indiqué sur la figure 4, afin de ne pas interférer avec l'anatomie de la dent. Selon l'invention, chacune des demi-coquilles 1 et 2 est d'épaisseur sensiblement constante, et égale à quelques dixièmes de mm, et elle est obtenue par moulage, d'une seule pièce avec ses brides 3, 5; 4, 6. Elle présente à l'extérieur la forme d'une dent, ce qui fait qu'elle garantit l'esthétique de la mâchoire lorsque la bague est utilisée dans une couronne provisoire. Du fait que l'épaisseur de la bague est constante, la surface intérieure est la réplique exacte de la surface extérieure, ce qui garantit l'esthétique de la couronne définitive après enlèvement de la bague.

La bague est de préférence réalisée en une matière plastique autorisant une certaine souplesse, par exemple en polycarbonate, et permettant une coloration dans la masse. Elle est de préférence translucide de façon à permettre une photopolymérisation du produit de remplissage, lorsqu'elle est utlisée pour réaliser une couronne défintive et de permettre le contrôle de la teinte de la couronne.

On peut choisir différentes dimensions pour pouvoir adapter les bagues à toutes les tailles et aux différents types de dents.

Pour utiliser la bague selon l'invention en couronne provisoire:

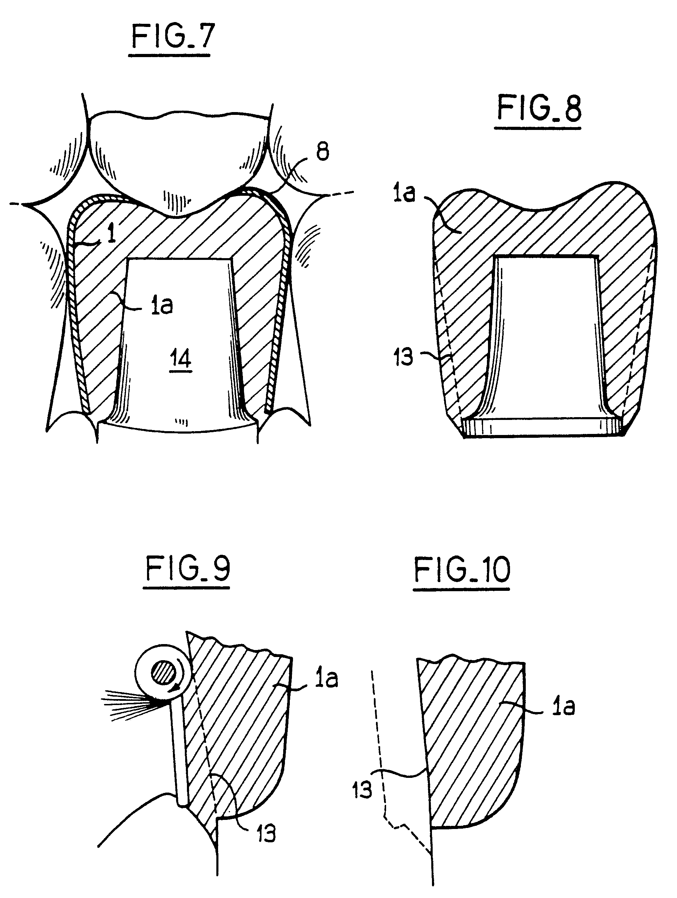

le chirurgien-dentiste sélectionne la bague la mieux adaptée à la dent à recouvrir,

la bague réalise alors un coffrage en préfigurant les parois latérales de la future couronne,

la bague est alors sommairement ajustée à la gencive. Une résine 1a auto-polymérisante, par exemple du métacrylate de méthyle ou épinine, est déposée à l'intérieur de la bague (voir figure 7),

le patient est prié de serrer les mâchoires,

la résine 1a encore molle se trouve ainsi comprimée d'un côté par les dents antagonistes, de l'autre par la gencive et la dent, et latéralement par la bague (figure 7). Cette résine molle 1a se trouve contrainte de mouler le dessus de la couronne, les points de contact et les limites au niveau de la gencive.

Une liaison chimique s'établit entre la bague et la résine 1a. L'ensemble (bague + résine) est retiré de la bouche du patient et meulé afin d'ajuster le bord cervical de la couronne provisoire à la limite périphérique de la dent taillée 14.

Les brides 3, 4; 5, 6 sont coupées ou sciées et ébavurées par meulage. La couronne provisoire est ensuite scellée provisoirement sur le moignon de dent 14. La bague est conservée comme partie intégrante de la couronne provisoire.

La couronne provisoire ainsi réalisée est à la fois esthétique et durable, de sorte qu'elle peut rester en place dans la bouche du patient pendant plusieurs semaines ou mois. La résistance mécanique de cette couronne est assurée notamment par la présence du rebord cuspidien 7, 8 qui constitue un renfort mécanique et en même temps améliore la liaison mécanique entre le produit de remplissage 1a et la bague, tout en réalisant une jonction étanche entre ceux-ci. De plus, ce rebord cuspidien évite la formation d'une aspérité entre le produit de remplissage et la bague susceptible de gêner le patient et d'abréger la durée de vie de la couronne.

Pour utiliser la bague selon l'invention en couronne permanente, la bague est choisie de façon à circonscrire totalement la dent préparée 14. Elle est sommairement ajustée à la gencive et maintenue entre ses collatérales par des coins de bois ou en matière plastique. Une résine composite 1a est placée à l'intérieur de la bague, ou mieux injectée, puis photopolymérisée si cette option est choisie. La face occlusale est réalisée en faisant mordre le patient (figure 7), les dents antagonistes modelant la résine de remplissage 1a. Il est possible d'améliorer la sculpture de la face occlusale en prenant appui sur le rebord cuspidien 7 avec une spatule 12 (voir figure 6) et de suivre son contour 9. La matière ayant terminé sa polymérisation à l'intérieur de la bague, l'ensemble (bague + résine composite 1a) est retiré de la bouche du patient. Dans ce cas, la résine composite 1a n'adhère pas à la bague. On sectionne les soudures 11 des brides de liaison des deux demi-coquilles 1, 2, ce qui a pour but de démouler la couronne définitive en résine composite (voir figure 8). La ligne 13 en pointillés délimite la partie excédentaire de résine à enlever par meulage.

La couronne de reconstitution ainsi obtenue est ajustée au niveau gingival par meulage (voir figures 9 et 10), afin d'éliminer la partie excédentaire jusqu'à la surface 13. Ce meulage se trouve facilité du fait que la limite cervicale de la préparation se trouve imprimée dans la reconstitution.

Les points de contact de la couronne avec les dents adjacentes sont renforcés en résine composite 1a afin de rattraper l'épaisseur de la bague. Enfin la couronne est soit collée, soit scellée sur le moignon taillé 14.

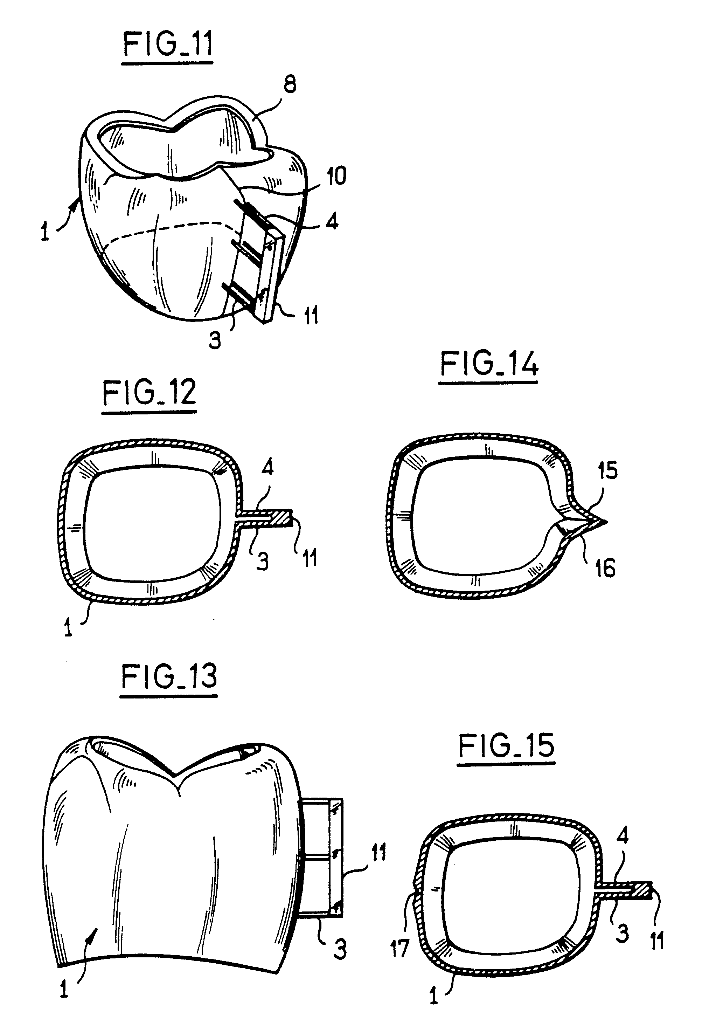

Dans la réalisation simplifiée selon les figures 11, 12, 13, la bague obtenue par moulage, comme dans la réalisation précédente, présente une seule fente 10 s'étendant sur toute la hauteur de la bague dont les bords présentent deux brides 3, 4 solidarisées l'une à l'autre par collage ou soudage et s'étendant sur une partie de la hauteur de la paroi latérale de la bague. Cette bague présente également un rebord cuspidien 8, la forme de ce rebord et celle de la face latérale de la bague correspondant à la forme extérieure de la dent à reconstituer. Comme dans la réalisation précédente, les deux brides 3, 4 sont adaptées pour pouvoir être séparées de la bague par sciage ou découpage après introduction et durcissement du produit de remplissage (1a) à l'intérieur de la bague.

Le procédé de réalisation d'une couronne provisoire ou définitive au moyen de la bague représentée sur les figures 11 à 13 est analogue à celui décrit en référence aux figures 7 à 10.

La bague selon l'invention présente de nombreux avantages. Tout d'abord, elle a une forme extérieure qui est celle d'une dent véritable. Sa constitution en deux demi-coquilles ou par une bague fendue permet sa réalisation par moulage en deux parties ou d'une seule pièce d'épaisseur constante, ce qui assure à la résine de remplissage la forme extérieure d'une dent véritable. Sa teinte peut correspondre à celle d'une dent. Elle peut être translucide de façon à permettre l'emploi de résines photopolymérisables. Elle permet d'assurer la mise en place d'une couronne provisoire ou définitive en une seule séance. Enfin elle assure la réalisation de couronnes dentaires particulièrement esthétiques, sans prise d'empreinte ni intervention du laboratoire de fabrication de prothèses.

Bien entendu, l'invention n'est pas limitée aux exemples que l'on vient de décrire et on peut apporter à ceux-ci de nombreuses modifications sans sortir du cadre de la présente invention.

Ainsi, comme indiqué sur la figure 14, les deux brides adjacentes 15, 16 peuvent être moulées d'une seule pièce avec le reste de la bague. Par ailleurs, la forme en V de ces deux brides 15, 16 permet une élasticité de la bague qui autorise sa mise en place sur des dents dont les diamètres sont légèrement différents.

Dans le cas de la figure 15, on a prévu à l'opposé des brides 4, 3 une zone 17 d'épaisseur réduite qui donne à la bague un aspect extérieur proche de l'anatomie d'une dent naturelle et qui constitue une articulation qui facilite le démoulage de la bague.

Par ailleurs, les brides 4, 3 pourraient être reliées à la bague autrement que par des lames de faible section, mais par des zones d'épaisseur réduite constituant une ligne de rupture de ces brides.

## Revendications

1. Bague pour la réalisation de couronnes dentaires, provisoires ou définitives, destinée à recevoir, à l'emplacement de la dent à reconstituer, un produit de remplissage (1a) pour reconstituer la dent, cette bague étant obtenue par moulage et présentant au moins une fente (10) s'étendant sur toute la hauteur de la bague dont les bords présentent deux brides (3, 4) solidarisées l'une à l'autre et s'étendant sur une partie de la face latérale de la bague, cette bague présentant un rebord cuspidien (8), la forme de ce rebord et celle de la face latérale de la bague correspondant à la forme extérieure de la dent à reconstituer et les deux brides (3, 4) étant adaptées pour pouvoir être séparées de la bague après introduction et durcissement du produit de remplissage (1a) à l'intérieur de la bague.

2. Bague selon la revendication 1, qui est constituée de deux demi-coquilles (1, 2) assemblées l'une à l'autre par deux paires de brides (3, 4; 5, 6) espacées l'une de l'autre, ces deux demi-coquilles présentant chacune un rebord cuspidien (7, 8).

3. Bague selon l'une des revendications 1 ou 2, qui est sensiblement d'épaisseur constante, de sorte que la forme intérieure de la bague correspond à la forme extérieure de la dent à reconstituer.

4. Bague selon l'une des revendications 1 ou 2, dans laquelle les bords extérieurs (11) des brides (3, 4; 5, 6) sont solidarisés par collage, soudure ou soudure à ultrasons.

5. Bague conforme à l'une des revendications 1 à 4, dans laquelle les brides (3, 4; 5, 6) sont constituées par des lames de faible section.

6. Application de la bague selon l'une des revendications 1 à 5, à la constitution d'une couronne provisoire, dans laquelle la bague est conservée comme partie intégrante de la couronne provisoire.

7. Application de la bague selon l'une des revendications 1 à 5, à la constitution d'une couronne définitive, dans laquelle la bague est utilisée comme moule de coffrage pour une résine composite puis est enlevée et la couronne est ensuite renforcée en résine pour constituer les points de contact avec les dents adjacentes et rattraper l'épaisseur de la bague qui a été enlevée.

## Patentansprüche

1. Ring zum Anfertigen von provisorischen oder endgültigen Zahnkronen, der dazu dient, anstelle des aufzubauenden Zahnes ein Füllmittel (1a) zum Aufbauen des Zahnes aufzunehmen, wobei dieser Ring mittels Abguß hergestellt wird und wenigstens einen, sich über die ganze Höhe des Ringes erstreckenden Schlitz (10) aufweist, dessen Ränder zwei miteinander verbundene, sich über einen Teil der Seitenfläche des Ringes erstreckende Flansche (3, 4) aufweisen, wobei dieser Ring einen Höckerrand (8) aufweist, und die Form dieses Randes und die der Seitenfläche des Ringes der äußeren Gestalt des aufzubauenden Zahnes entsprechen und die beiden Flansche (3, 4) so ausgebildet sind, daß sie sich nach dem Einfüllen und Aushärten eines Füllmittels (1a) im Innenraum des Ringes vom Ring entfernen lassen.

2. Ring gemäß Anspruch 1, der aus zwei Halb-Matrizen (1, 2) besteht, die untereinander durch 2 Paar voneinander beabstandete Flansche (3, 4; 5, 6) verbunden sind, wobei die zwei Halb-Matrizen jeweils einen Höckerrand aufweisen (7, 8).

3. Ring gemäß Anspruch 1 oder 2, der im wesentlichen von konstanter Dicke ist, so daß die Innenform des Ringes der äußeren Form des zu rekonstituierenden Zahnes entspricht.

4. Ring gemäß Anspruch 1 oder 2, bei welchem die Außenränder (11) der Flansche (3, 4; 5, 6) durch Kleben, Schweißen oder Ultraschallschweißen vereinigt sind.

5. Ring gemäß einem der Ansprüche 1 bis 4, bei welchem die Flansche (3, 4; 5, 6) als Streifen von geringem Querschnitt ausgebildet sind.

6. Anwendung des Ringes gemäß einem der Ansprüche 1 bis 5 zur Gestaltung einer provisorischen Krone, wobei der Ring als integrierender Bestandteil der provisorischen Krone belassen wird.

7. Anwendung des Ringes gemäß einem der Ansprüche 1 bis 5 zur Gestaltung einer endgültigen Krone, wobei der Ring als Schalungsform für ein Reaktionsharz dient dann entfernt wird und die Krone dann mittels Harz verstärkt wird, damit sich die Berührungspunkte mit den Nachbarzähnen ergeben und die Dicke des abgenommenen Ringes wettgemacht wird.

**Claims**

1. Ring for the construction of either temporary or permanent dental crowns in which a filling product (1a) for restoring a tooth is intended to be received at the location of the tooth to be restored, characterized in that the ring is obtained by molding and has at least one slit (10) which extends over the full height of the ring and the edges of which have two coupling elements (3, 4) rigidly fastened together and extending over part of the lateral face of the ring, that said ring has a cuspal rim (8), the shapes of said rim and of the lateral face of the ring being such as to correspond to the external shape of the tooth to be restored, and that the two coupling elements (3, 4) are adapted to permit of separation from the ring after introduction and hardening of the filling product (1a) within the ring.

2. Ring according to claim 1, which is constituted by two half-shells (1, 2) assembled together by means of two pairs of coupling elements (3, 4; 5, 6) in spaced relation, these two half-shells being each provided with a cuspal rim (7, 8).

3. Ring according to either of claims 1 or 2, which is substantially of constant thickness so that the internal shape of the ring corresponds to the external shape of the tooth to be restored.

4. Ring according to either of claims 1 or 2, in which the external edges (11) of the coupling elements (3, 4; 5, 6) are rigidly fastened together by bonding, welding, ultrasonic welding or the like.

5. Ring according to any one of claims 1 to 4, in which the coupling elements (3, 4; 5, 6) are constituted by small-section strips.

6. Application of the ring according to any one of claims 1 to 5 to the construction of a temporaty crown, in which the ring is kept as an integral part of the temporary crown.

7. Application of the ring according to any one of claims 1 to 5 to the construction of a permanent crown, in which the ring is used as a shuttering mold for a composite resin and then removed, whereupon the crown is reinforced with resin in order to form the points of contact with adjacent teeth and to compensate for the thickness of the ring which has been removed.

FIG_1

FIG_2

FIG_3

FIG_4

FIG_5

FIG_6

FIG. 7

FIG. 8

1

1a

14

8

1a

13

FIG. 9

FIG. 10

1a

13

1a

13

FIG_11

FIG_12

FIG_13

FIG_14

FIG_15